Europäisches Patentamt

European Patent Office

Office européen des brevets

(19)

(11) **EP 0 208 583 B2**

(12) **NOUVEAU FASCICULE DE BREVET EUROPEEN**

(45) Date de publication et mention de la décision concernant l'opposition:
**03.03.1999 Bulletin 1999/09**

(45) Mention de la délivrance du brevet:
**05.09.1990 Bulletin 1990/36**

(21) Numéro de dépôt: **86401324.8**

(22) Date de dépôt: **17.06.1986**

(51) Int. Cl.$^6$: **B23K 3/02**

(54) **Fer à souder**

Lötkolben

Soldering iron

(84) Etats contractants désignés:
**BE CH DE GB LI NL SE**

(30) Priorité: **18.06.1985 FR 8509249**

(43) Date de publication de la demande:
**14.01.1987 Bulletin 1987/03**

(73) Titulaire: **GUILBERT EXPRESS S.A.**
**F-75011 Paris (FR)**

(72) Inventeurs:
• **Le Marchand, Alain**
**F-95570 Villaines Sous Bois (FR)**

• **Moumaneix, Francis**
**F-93340 Le Raincy (FR)**

(74) Mandataire:
**Plaçais, Jean-Yves et al**
**Cabinet Netter,**
**40, rue Vignon**
**75009 Paris (FR)**

(56) Documents cités:
DE-C- 877 533     FR-A- 348 384
FR-A- 2 312 326     FR-A- 2 374 124
GB-A- 641 797     US-A- 957 636
US-A- 1 134 165

EP 0 208 583 B2

**Description**

L'invention concerne un fer à souder, utilisable notamment par les couvreurs, lés zingueurs et les ferblantiers pour souder en général du zinc, des métaux ou alliages composites à base de zinc, et des métaux ou alliages en feuilles revêtues ou non par exemple de matière synthétique.

On sait qu'un tel fer à souder comprend un corps de chauffe dans lequel débouche un brûleur alimenté en gaz combustible (par exemple du propane) et en air primaire de combustion. Une panne amovible, en général en cuivre, est montée sur le corps et comprend une queue qui s'étend à l'intérieur du corps pour être chauffée par la flamme produite par le brûleur, et une partie extérieure au corps qui est chauffée par conduction par la queue de panne et qui est destinée à être amenée au contact des métaux ou alliages à souder. Le corps comprend également au moins un orifice ou une ouverture servant à la fois à l'allumage de la flamme, à l'entrée d'air secondaire dans le corps pour l'aération et le développement de la flamme, et à la sortie des gaz de combustion, enflammés ou non.

En fonctionnement, la flamme produite par le brûleur est alimentée en air secondaire et vient lécher la queue de panne pour la chauffer.

Un tel fer est connu par exemple par FR—A—2 374 124.

Ces fers souffrent en général d'un certain nombre d'inconvénients. Le corps de chauffe, lorsqu'il a des dimensions importantes, empêche l'utilisation du fer à souder dans les endroits étroits et, lorsqu'il a des dimensions plus faibles pour pouvoir être utilisé dans ces endroits, entoure étroitement la partie de la queue de panne qui est à l'opposé du brûleur, de sorte que la flamme produite par le brûleur ne peut venir lécher que la surface de la queue de panne qui est tournée vers le brûleur. Il en résulte nécessairement une montée en température assez lente de la partie extérieure de la panne, une plus grande consommation de gaz pour le maintien de cette partie extérieure de la panne à une température déterminée, un chauffage important des parois du corps de chauffe qui entourent la queue de panne. La flamme est parfois difficile à allumer et peu stable, notamment à débit très réduit de gaz combustible.

Pour tenter d'améliorer le chauffage de la queue de panne par la flamme, FR—A—2 312 326 propose de disposer dans le corps, autour de la queue de panne, une rampe annulaire de formation de flamme, pour produire une flamme entourant la queue de panne et orientée radialement vers celle-ci. Il en résulte toutefois une complication du montage et de l'assemblage du fer à souder, une plus grande sensibilité ou fragilité aux chocs, et un chauffage trop important de la queue de panne et donc une usure prématurée de celle-ci.

La présente invention a pour objet un fer à souder qui ne présente par les inconvénients précités de la technique antérieure et qui, notamment, consomme moins de gaz en fonctionnement normal, permet une montée en température rapide de la partie extérieure de la panne, offre une très grande stabilité de flamme, notamment à débit de gaz très réduit, et comprend un corps de chauffe à encombrement faible permettant l'utilisation du fer à souder dans les zones les plus étroites.

A cet effet, l'invention propose un fer à souder selon la revendication 1.

L'invention permet d'augmenter à un maximum la surface d'échange thermique entre la queue de panne logée dans le corps et la flamme produite par le brûleur, et cela sans augmenter le volume ou la masse de la queue de panne et l'encombrement du corps.

C'est essentiellement grâce à l'aménagement du circuit d'air secondaire à l'intérieur du corps de chauffe que la flamme produite par le brûleur peut venir lécher toute la surface de la queue de panne, sans qu'il soit nécessaire pour cela de disposer dans le corps une rampe annulaire de formation de flamme autour de la queue de panne.

Ce chauffage de la surface totale de la queue de panne par la flamme du brûleur permet à la fois de réduire la surface totale de la queue de panne, et donc la masse de celle-ci, de réduire de 30% environ le temps de mise à température de la partie extérieure de la panne, et de réduire d'environ 40% la consommation de gaz combustible en fonctionnement normal.

Des caractéristiques additionelles de l'invention sont énoncées dans les revendications 2 et suivantes.

La paroi avant du corps et la surface en regard de la queue de panne délimitent entre elles un espace libre, relié à l'extérieur par l'orifice d'entrée d'air secondaire et permettant la circulation de l'air secondaire autour de la queue de panne sur toute la hauteur de celle-ci, sensiblement jusqu'à l'orifice inférieur de montage de la panne dans le corps.

Ainsi, la flamme produite par le brûleur est nécessairement amenée à contourner la queue de panne et à lécher toute la surface périphérique de celle-ci, sur toute la hauteur de la queue de panne.

Grâce à l'inclinaison de la queue de panne sur l'axe du brûleur, la flamme produite par le brûleur rencontre sur son trajet une section de queue de panne ayant une forme allongée sensiblement ovale ou elliptique dont le grand axe est dans l'axe du brûleur, ce qui favorise la progression de la flamme le long de la surface de la queue de panne.

Des génératrices ondulés on brisées réduisent le volume total et donc la masse de la queue de panne, tout en augmentant ou au moins en conservant sa surface extérieure totale et donc sa surface d'échange thermique avec la flamme.

L'orifice de passage de la vis de fixation axiale de la queue de panne se trouve en amont de l'orifice d'entrée d'air secondaire par rapport à la direction de la flamme, ce qui permet de protéger la vis de fixation.

Lorsque la surface extérieure de la queue de panne comprend une partie intermédiaire en forme de gorge, cette panne peut être utilisée également sur un fer à souder du type à fixation latérale de la queue de panne.

Dans le cas où le volume intérieure du corps de chauffe a, perpendiculairement à l'axe de la queue de panne, une section droite qui diminue progressivement de son extrémité supérieure jusqu'à l'orifice inférieur de montage de la panne, il en résulte un encombrement plus faible de ce corps de chauffe du côté de la panne, ce qui rend le fer à souder plus facile à utiliser dans les endroits étroits.

Les parois de l'orifice d'entrée d'air secondaire convergentes vers l'extérieur du corps empêchent les gaz enflammés sortant par cet orifice de s'étaler à l'extérieur du corps et de venir détériorer ou brûler des produits situés au voisinage de la zone de soudure. En fait, grâce à l'invention, très peu de gaz enflammés sortent du corps par cet orifice, et forment une très petite flamme extérieure.

Dans la description qui suit, faite à titre d'exemple, on se réfère aux dessins annexés, dans lesquels:

la figure 1 est une vue schématique partielle en coupe longitudinale d'un fer à souder de la technique antérieure;
la figure 2 est une vue schématique en coupe longitudinale d'un fer à souder selon l'invention;
la figure 3 est une vue extérieure du fer selon l'invention;
la figure 4 est une vue schématique de dessus de ce fer.

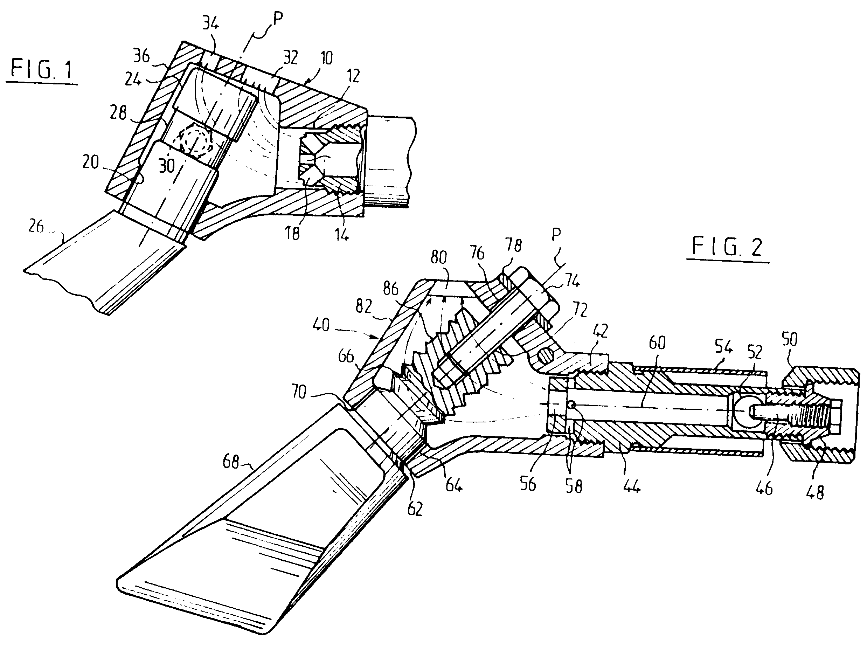

On se réfère d'abord à la figure 1, représentant un fer à souder de la technique antérieure.

Ce fer comprend, de façon classique, un corps de chauffe 10 comprenant, à sa partie arrière, un orifice axial 12 de montage d'un brûleur 14 alimenté en gaz combustible et en air primaire de combustion, la tête du brûleur comprenant un orifice axial 16 et des orifices latéraux 18 de sortie de gaz combustible et d'air primaire de combustion.

La paroi inférieure du corps 10 présente, à son extrémité avant, un orifice inférieur 20 de montage d'une panne, dont la queue 24 est reçue à l'intérieur du corps 10 et dont la partie extérieure 26 s'étend en oblique par rapport à l'axe de la queue de panne 24. Cette queue de panne comprend une gorge annulaire 28, dans laquelle s'engage l'extrémité d'une vis de blocage passant par un trou fileté 30 d'une paroi latérale du corps 10, et venant appuyer la queue de panne sur la paroi latérale opposée du corps.

La paroi supérieure de ce corps comprend deux orifices 32 et 34 d'entrée d'air secondaire et de sortie de gaz de combustion, en général enflammé, l'orifice 32 ayant des dimensions beaucoup plus imporantes que celles de l'orifice 34 et étant situé en amont de l'axe de la queue de panne par rapport à la direction de la flamme, tandis que l'orifice 34 débouche sur la tranche d'extrémité de la queue de panne 24, au voisinage de la partie avant de celle-ci.

La paroi avant 36 du corps 10 entoure étroitement la surface avant de la queue de panne, pour diminuer l'encombrement général du corps et faciliter son utilisation dans les zones étroites.

En fonctionnement, la flamme produite par le brûleur est accrochée sur les débouchés des orifices de sortie 16 et 18 du brûleur et circule à l'intérieur du corps 10 en direction des orifices 32 et 34, comme représenté sur le dessin. Il en résulte que seule la demi-surface cylindrique de la queue de panne 24 qui est orientée vers l'extrémité du brûleur est chauffée, la demi-surface opposée de la queue de panne n'étant en fait sensiblement par au contact avec la flamme, et qu'en outre la moitié inférieure de la queue de panne 24, qui est reliée à la partie utile 26 de la queue de panne, est moins chauffée que sa partie supérieure sur laquelle est concentrée la plus grande partie de la flamme.

La disposition des orifices 32 et 34 d'entrée d'air secondaire dans le corps, et la très faible section transversale de l'espace compris entre la paroi avant 36 du corps et la surface avant de la queue de panne 24 interdisent la circulation d'air secondaire dans cet espace et donc le développement d'une flamme sur la surface avant du corps. De plus, l'appui de la queue de panne sur une paroi latérale du corps empêche la flamme de circuler dans cette zone autour de la queue de panne.

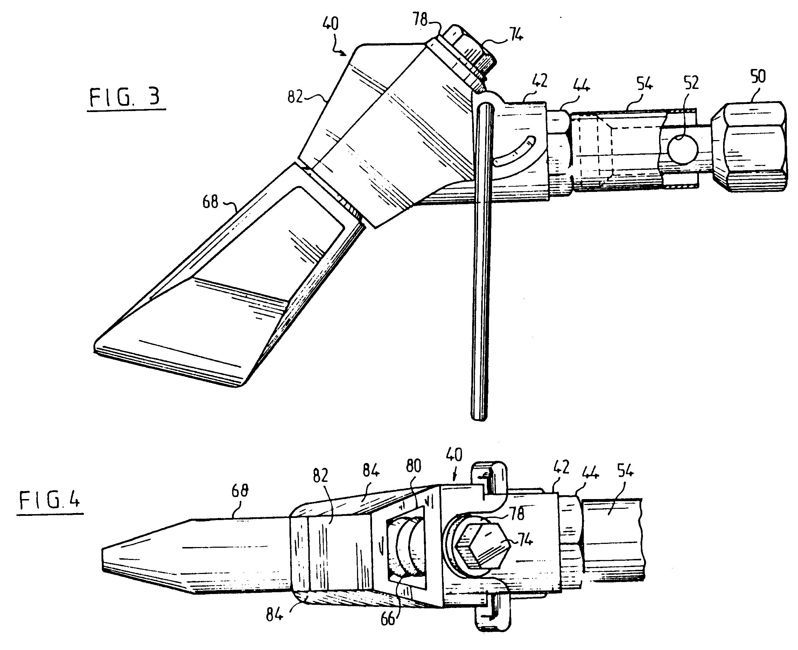

On se réfère maintenant aux figures 2, 3 et 4 représentant un fer à souder selon l'invention.

Ce fer à souder comprend un corps de chauffe 40, réalisé de façon classique en fonte aciérée, et dont l'extrémité arrière comprend un conduit cylindrique axiale 42 dans lequel est vissée l'extrémité avant d'un brûleur 44. A son extrémite arrière, le brûleur 44 reçoit un injecteur 46 de gaz combustible, monté par vissage dans un porte-injecteur 48 lui-même monté par vissage à l'extrémité arrière du brûleur 44. Un écrou 50 entoure à coulissement le porte-injecteur 48 et permet le raccordement à un dispositif d'alimentation en gaz combustible.

De façon classique, des orifices 52 d'entrée d'air primaire sont formés dans la paroi cylindrique du brûleur 44, au débouché de l'intecteur 46. Un manchon pare-vent 54 peut être fixé à étanchéité sur un épaulement du corps du brûleur et entoure à distance les orifices 52 d'entrée d'air primaire.

La tête ou extrémité avant du brûleur 44 comprend un orifice axial 56 de sortie de gaz combustible et d'air primaire, et de petits orifices latéraux 58, orientés radialement par rapport à l'axe 60 du brûleur, pour former une flamme à dard unique avec anneau d'accrochage de la flamme.

La paroi inférieure du corps 40 comprend une partie avant oblique 62 par rapport à l'axe du brûleur et dans laquelle est formé un orifice cylindrique 64 de montage d'une panne dont la queue 66 de forme générale cylidrique s'étend à l'intérieur du corps 40 et dont la partie extérieure 68 s'étend coaxialement à la queue de panne 66. Un évasement tronconique 70 relie la queue de panne 66 à la partie extérieure 68 et permet de fermer de façon étanche le débouché vers l'extérieur de l'orifice 64.

L'extrémité supérieure de la queue de panne 66 présente un trou axial taraudé 72 recevant une vis de fixation 74 passant dans un orifice 76 de la paroi supérieure du corps 40. Une rondelle 78 est interposée entre la tête de la vis 74 et le débouché de l'orifice 76, pour fermer ce débouché de façon sensiblement étanche.

La paroi supérieure du corps 40 comprend, en aval de l'orifice 76 et de l'extrémité de la queue de panne 66 par rapport au brûleur 44, un orifice unique 80 d'entrée d'air secondaire et de sortie de gaz de combustion, cet orifice 80 ayant par exemple une forme trapézoïdale dont l'axe de symétrie se trouve dans le plan longitudinal de symétrie du fer à souder, cette forme trapézoïdale allant en se rétrécissant en direction de la paroi avant 82 du corps 40.

Cette paroi avant 82 est inclinée en oblique par rapport à la queue de panne 66 et s'écarte de celle-ci à partir de l'orifice inférieur 64 de montage de la panne dans le corps 40. De même, les parois latérales 84 du corps 40, reliées à l a paroi avant 82, s'écartent en oblique de la queue de panne 66 à partir des côtés de la paroi inférieure avant 62, en direction de l'extrémité supérieure du corps.

Cette configuration particulière du corps de chauffe 40 permet, simultanément, de réduire l'encombrement extérieur du corps 40 du côté de la partie utile 68 de la panne, pour permettre l'utilisation du fer à souder dans des zones très étroites, et également de former autour de la queue de panne 66 un espace libre qui entoure la demi-surface cylindrique avant de la queue de panne et qui est relié à l'extérieur par l'orifice 80 de telle sorte que l'air secondaire entrant dans le corps 40 par l'orifice 80 peut circuler tout autour de la demi-surface cylindrique avant de la queue de panne et sur toute la hauteur de celle-ci.

La flamme à dard unique produite par le brûleur 44 et accrochée à l'extrémité ayant de celui-ci peut donc se développer à l'intérieur du corps tout autour de la queue de panne 66, et vient lécher toute la surface extérieure de celle-ci avant de se diriger vers l'orifice 80 d'entrée d'air secondaire.

Si l'on considère un plan P passant par l'axe de la queue de panne et perpendiculaire au plan du dessin en figures 1 et 2, on voit que, dans le fer selon l'invention, la flamme circule sur toute la surface semi-cylindrique de la queue de panne se trouvant en amont du plan P, puis traverse le plan P et circule sur toute la surface semi-cylindrique de queue de panne en aval du plan P.

Dans le fer de la figure 1, une fraction importante (environ les 3/4) de la flamme circule sur la moitié supérieure de la surface semi-cylindrique de la queue de panne se trouvant en amont du plan P et se dirige vers l'orifice 32, sans traverser le plan P, et la fraction restante (1/4) de la flamme circule sur environ 1/4 de la surface semi-cylindrique de la queue de panne en amont du plan P et sur environ 1/3 de la surface semi-cylindrique de queue de panne en aval du plan P pour se diriger vers l'orifice 34.

Comme l'énergie thermique cédée à la queue de panne est proportionnelle à l'énergie thermique de la flamme et à la surface chauffée de la queue de panne soit $W = k\,E \times S$ ($W$ étant l'énergie cédée à la queue de panne, $k$ un coefficient, $E$ l'énergie de la flamme et $S$ la surface chauffée de la queue de panne, on a, selon l'invention:

$$W = k\,(E \times \frac{S1}{2} + E \times \frac{S1}{2})$$
$$= k\,E\,S1$$

$S1$ étant la surface totale de la queue de panne, alors que, dans le fer de la figure 1 on a:

$$W = k\left[\frac{3}{4}\,E \times \frac{1}{2} \times \frac{S1}{2} + \frac{1}{4}\,E\,(\frac{1}{4} \times \frac{S1}{2} + \frac{1}{3} \times \frac{S1}{2})\right]$$
$$= \frac{1}{4}\,k\,E\,S1$$

d'où il résulte que l'énergie thermique cédée à la queue de panne est environ 4 fois plus importante dans le fer selon l'invention que dans le fer de la figure 1, toutes conditions égales par ailleurs.

En outre, l'axe 60 du brûleur vient rencontrer l'axe de la queue de panne en un point qui est situé dans la moitié inférieure de la queue de panne, ce qui favorise le chauffage de cette moitié inférieure. L'angle formé par l'axe de la queue de panne et l'axe du brûleur est d'environ 45°, ce qui facilite l'écoulement de la flamme le long de la surface périphérique de la queue de panne.

Avantageusement, comme on le voit en figure 2, les génératrices de la surface extérieure de la queue de panne sont des lignes ondulées, par exemple en dents de scie, ce qui permet d'augmenter cette surface extérieure et donc la surface d'échange thermique avec la flamme tout en réduisant la masse de la queue de panne.

Par ailleurs, cette surface extérieure peut présenter une gorge annulaire 86 à fond plat, destinée à recevoir l'extrémité d'une vis de blocage orientée perpendiculairement à l'axe de la queue de panne, ce qui permet le montage de la panne dans un fer à souder du type de celui représenté en figure 1.

Le fonctionnement du fer à souder selon l'invention découle à l'évidence de ce qui précède:

Le débit de gaz combustible dans le brûleur 44 provoque l'aspiration d'air primaire de combustion dans ce brûleur par les orifices 52. Le mélange combustible arrivant dans le corps 40 est allumé, par exemple au moyen de la flamme d'un briquet introduite dans le corps par l'orifice 80, ou au moyen de tout autre dispositif classique approprié. La flamme produite s'étend de l'extrémité avant du brûleur 44 jusqu'à l'orifice 80 en circulant sur toute la surface extérieure de la queue de panne 66. L'orifice 80 sert à la fois à l'entrée d'air secondaire de combustion à l'intérieur du corps 40 et à la sortie des gaz de combustion, qui sont en général enflammés et produisent une petite flamme peu visible sur le dessus du corps 40. Pour concentrer cette flamme et éviter son étalement, les parois de l'orifice 80 sont, de préférence, convergentes vers l'extérieur du corps, comme représenté en figure 2. La partie utile 68 de la panne est chauffée par conduction par la queue de panne 66 et est portée à la température voulue, celle-ci étant réglable par réglage du débit de gaz alimentant le brûleur 44.

Le fer à souder selon l'invention présente, par rapport à la technique antérieure selon la Figure 1, les avantages suivants:

toutes conditions égales par ailleurs, la consommation de gaz pour le maintien à température déterminée de la partie utile 68 de la panne est réduit d'environ 40% et le temps de montée en température de cette partie utile est réduit d'environ 30%,

la masse de la queue de panne 66 est plus faible, ce qui permet une économie de cuivre,

la flamme est extrêmement stable à tous les débits et notamment pour un débit très réduit de gaz,

l'allumage de la flamme est facile et immédiat,

la tête de la vis 74 de fixation de la panne est protégée de la flamme,

le corps de chauffe est d'encombrement réduit et sa section transversale, dans un plan perpendiculaire à l'axe de la queue de panne, va en diminuant dans la direction de la partie utile de la panne, ce qui permet d'utiliser le fer à souder dans des endroits d'accès étroit,

l'étanchéité de l'orifice 64 de montage de la panne est assurée par la portée tronconique 70 reliant la partie utile 68 de la panne à la queue de panne 66,

la sortie de flamme est concentrée en partie supérieure du corps 40.

## Revendications

1.   Fer à souder utilisable dans des zones de travail étroites, comprenant un brûleur (44) présentant à sa partie arrière des arrivées de gaz combustible (46) et d'air primaire de combustion (52) et débouchant par son extrémité avant dans un corps de chauffe (40), et une panne (66,68) traversant et obturant une ouverture inférieure (64) du corps de telle façon que la queue de panne (66) soit logée à l'intérieur du corps en regard du brûleur, tandis que la partie active (68) de la panne fait saillie vers le bas à l'extérieur du corps, le corps comportant une paroi supérieure en regard de l'extrémité de la queue de panne et l'intérieur du corps communiquant avec l'extérieur par au moins une ouverture (80) ménagée dans la paroi supérieure, permettant l'entrée d'air secondaire et la sortie de la flamme et des gaz de combustion, caractérisé en ce que l'ouverture d'entrée d'air secondaire et de sortie de flamme et de gaz de combustion (80), ou le barycentre des ouvertures d'entrée d'air secondaire et de sortie de flamme et de gaz de combustion, est situé en aval de la queue de panne par rapport au brûleur, le fer à souder étant vu de dessus selon l'axe de la quelle de panne, la surface de la queue de panne et la paroi (82) du corps de chauffe délimitant un espace qui communique librement avec ces mêmes ouvertures pour permettre la circulation de l'air secondaire et des gaz de combustion et le développement de la flamme produite par le brûleur autour de toute la demi-surface avant de la queue de panne.

2.   Fer selon la revendication 1, caractérisé en ce que l'axe (60) du brûleur (44) est orienté vers la moitié inférieure de la queue de panne (66).

3.   Fer selon l'une des revendications 1 et 2, caractérisé en ce que ledit espace libre s'étend sensiblement jusqu'à l'ouverture (64) de montage de la panne.

4.   Fer selon la revendication 3, caractérisé en ce que la section transversale dudit espace libre augmente progressivement en direction de l'ouverture (80) d'entrée d'air secondaire.

5.   Fer selon l'une des revendications précédentes, caractérisé en ce que le brûleur (44) est du type à flamme à dard unique orienté dans l'axe du brûleur et en ce que l'axe de la queue de panne (66) est incliné en oblique sur l'axe du brûleur.

**6.** Fer selon la revendication 5, caractérisé en ce que l'angle entre l'axe du brûleur et l'axe de la queue de panne (66) est d'environ 45°.

**7.** Fer selon l'une des revendications précédentes, caractérisé en ce que le volume intérieur du corps (40) a, perpendiculairement à l'axe de la queue de panne, une section droite que diminue progressivement de son extrémité supérieure à l'ouverture (64) de montage de la panne.

**8.** Fer selon l'une des revendications précédentes, caractérisé en ce que les parois de l'ouverture (80) d'entrée d'air secondaire convergent vers l'extérieur du corps.

**9.** Fer selon l'une des revendications précédentes, caractérisé en ce que la queue de panne (66) est de forme sensiblement cylindrique à section droite circulaire variable, sa surface extérieure de révolution étant engendrée par des lignes ondulées, ou encore des lignes brisées, par exemple en dents de scie.

**10.** Fer selon l'une des revendications précédentes, caractérisé en ce que de panne (66) est à fixation axiale dans le corps (40) et comprend, à son extrémité supérieure, un tour (72) à filetage interne recevant une vis de fixation (74) passant par un orifice (76) de la partie supérieure du corps.

**11.** Fer selon la revendication 10, caractérisé en ce que la panne présente un évasement tronconique (70) entre la queue (66) et la partie extérieure (68), qui s'appuie au bord de l'ouverture de montage (64).

**12.** Fer selon l'une des revendications précédentes, caractérisé en ce que l'orifice (80) d'entrée d'air secondaire et de sortie de flamme et de gaz de combustion de corps de chauffe (40) est formé sur le dessus du corps (40).

**13.** Fer selon l'une des revendications précédentes, caractérisé en ce que la surface de la queue de panne comprend une partie intermédiaire (86) en forme de gorge, permettant sa fixation latérale dans le corps au moyen d'une vis de blocage orientée perpendiculairement à l'axe de la queue de panne.

**14.** Fer selon l'une des revendications 10 et 11, caractérisé en ce que le serrage de la vis de fixation laisse subsister un intervalle entre l'extrémité supérieure de le queue de panne et la paroi en regard du corps.

**Claims**

**1.** A soldering iron for use in narrow working areas, comprising a burner (44) having at its rear part inlets for combustible gas (46) and for primary combustion air (52) and opening out with its forward end into a heater body (40), and a bit (66,68) passing through and stopping a bottom opening (64) of the body in such a way that the bit stock (66) is received inside the body (40) facing the burner (44), while the working portion (68) of the bit projects downwards outside the body, the body having a top wall facing the end of the stock and the inside of the body communicating with the outside through at least one opening (80) provided in the top wall, allowing the admission of secondary air and the exhaustion of the flame and the combustion gases, characterized in that the opening for admitting secondary air and for exhausting flame and combustion gases (80), or the center of gravity of the openings for admitting secondary air and for exhausting flame and combustion gases, is situated downstream from the stock relative to the burner when the soldering iron is viewed from above along the axis of the stock, the surface of the stock and the wall (82) of the heater body delimiting a space which communicates freely with the same openings for allowing a flow of secondary air and combustion gases and a spreading of the flame produced by the burner around all of the front half-surface of the stock.

**2.** A soldering iron according to claim 1, characterized in that the axis (60) of the burner (44) is directed towards the bottom half of the stock (66).

**3.** A soldering iron according to one of claims 1 and 2, characterized in that the said free space extends substantially right up to the bit mounting opening (64).

**4.** A soldering iron according to claim 3, characterized in that the cross section of the said free space increases progressively towards the opening (80) for admitting secondary air.

5. A soldering iron according to any preceding claim, characterized in that the burner (44) is of the type having a single tip directed along the burner axis and in that the axis of the stock (66) is obliquely inclined to the burner axis.

6. A soldering iron according to claim 5, characterized in that the angle between the burner axis and the axis of the stock (66) is about 45°.

7. A soldering iron according to any preceding claim, characterized in that the inside volume of the body (40) has a right cross section perpendicular to the axis of the stock which diminishes progressively from its top end towards the bit mounting opening (64).

8. A soldering iron according to any preceding claim, characterized in that the walls of the opening (80) for admitting secondary air converge towards the outside of the body.

9. A soldering iron according to any preceding claim, characterized in that the stock (66) is substantially cylindrical in shape with varying circular cross section, its cylindrical outside surface being generated by wavy lines or by zig-zag lines, e.g. sawtooth lines.

10. A soldering iron according to any preceding claim, characterized in that the stock (66) is fixed axially in the body (40) and includes an internally tapped hole (72) at its top end receiving a fixing screw (74) passing through an orifice (76) in the top portion of the body.

11. A soldering iron according to claim 10, characterized in that the bit has a frusto-conical flare (70) between its stock (66) and its external portion (68), which flare bears against the edge of the bit mounting opening (64).

12. A soldering iron according to any preceding claim, characterized in that the orifice (80) for admitting secondary air and for exhausting flame and combustion gases from the heater body (40) is formed on the top of the body (40).

13. A soldering iron according to any preceding claim, characterized in that the surface of the stock includes an intermediate portion (86) in the form of a groove enabling the stock to be fixed laterally in the body by means of a lock screw directed perpendicularly to the axis of the stock.

14. A soldering iron according to one of claims 10 and 11, characterized in that the tightening of the fixing screw leaves a remaining interval between the top end of the stock and the facing wall of the body.

**Patentansprüche**

1. Lötkolben zum Gebrauch in engen Arbeitszonen, mit einem Brenner (44), der an seinem rückwärtigen Teil Zuführungen für Brenngas (46) und für Primärluft (52) aufweist und der an seinem vorderen Ende in einen Heizkörper (40) mündet, und mit einem Lötspitzenteil (66, 68), das durch eine untere Öffnung (64) des Heizkörpers ragt und diese verschließt, derart, daß der Lötspitzenschaft (66) im Inneren des Heizkörpers gegenüber dem Brenner sitzt, während der aktive Teil (68) des Lötspitzenteiles nach unten außerhalb des Heizkörpers vorsteht, wobei der Heizkörper eine obere Wand aufweist, die dem Ende des Lötspitzenschaftes gegenüberliegt, und das Innere des Heizkörpers mit der Umgebung über mindestens eine in der oberen Wand vorgesehene Öffnung (80) für den Sekundärlufteintritt und den Flamm- und Brenngasaustritt vorgesehen ist, dadurch gekennzeichnet, daß die Öffnung (80) für Sekundärlufteintritt und Flamm- und Brenngasaustritt oder der Schwerpunkt der Öffnungen für Sekundärlufteintritt und Flamm- und Brenngasaustritt im Hinblick auf den Brenner hinter dem Lötspitzenschaft liegt, wenn der Lötkolben von oben auf die Achse des Lötspitzenschaftes gesehen wird, wobei die Oberfläche des Lötspitzenschaftes und die Wand (82) des Heizkörpers einen Hohlraum begrenzen, der mit denselben Öffnungen in Verbindung steht, um die Sekundärluftzirkulation und die Brenngaszirkulation sowie die Entwicklung der Flamme, die vom Brenner erzeugt wird, um die ganze vordere halbe Fläche des Lötspitzenschaftes zu ermöglichen.

2. Lötkolben nach Anspruch 1, dadurch gekennzeichnet, daß die Achse (60) des Brenners (44) auf die untere Hälfte des Lötspitzenschaftes (66) gerichtet ist.

3. Lötkolben nach einem der Ansprüche 1 und 2, dadurch gekennzeichnet, daß der genannte Hohlraum sich im wesentlichen bis zur Öffnung (64) für die Montage der Lötspitze erstreckt.

4. Lötkolben nach Anspruch 3,
dadurch gekennzeichnet, daß der Querschnitt dieses Hohlraumes progressiv in Richtung der Öffnung (80) für den Sekundärlufteintritt größer wird.

5. Lötkolben nach einem der vorangegangenen Ansprüche,
dadurch gekennzeichnet, daß es sich bei dem Brenner (44) um einen Einflammenbrenner handelt, dessen Flamme in der Achse des Brenners ausgerichtet ist, und daß die Achse des Lötspitzenschaftes (66) schräg zur Brennerachse geneigt ist.

6. Lötkolben nach Anspruch 5,
dadurch gekennzeichnet, daß der Winkel zwischen der Brennerachse und der Achse des Lötspitzenschaftes (66) ungefähr 45° beträgt.

7. Lötkolben nach einem der vorangegangenen Ansprüche,
dadurch gekennzeichnet, daß das Innenvolumen des Heizkörpers (40) senkrecht zur Achse des Lötspitzenschaftes einen Querschnitt besitzt, der von seinem oberen Ende bis zur Öffnung (64) für die Montage des Schaftes progressiv kleiner wird.

8. Lötkolben nach einem der vorangegangenen Ansprüche,
dadurch gekennzeichnet, daß die Wände der Öffnung (80) für den Sekundärlufteintritt in Richtung auf die Außenseite des Heizkörpers konvergieren.

9. Lötkolben nach einem der vorangegangenen Ansprüche,
dadurch gekennzeichnet, daß der Lötspitzenschaft (66) im wesentlichen zylindrisch ist und einen variablen kreisförmigen Querschnitt besitzt, und die Erzeugende der Mantelfläche wellenförmig oder auch unterbrochen, wie beispielsweise in Form von Sägezähnen, verläuft.

10. Lötkolben nach einem der vorangegangenen Ansprüche,
dadurch gekennzeichnet, daß der Lötspitzenschaft (66) axial im Heizkörper (40) befestigt ist und an seinem oberen Ende eine Bohrung (72) mit Innengewinde aufweist, die eine Befestigungsschraube (74) aufnimmt, die durch eine Öffnung (76) des oberen Teils des Heizkörpers hindurchgeht.

11. Lötkolben nach Anspruch 10,
dadurch gekennzeichnet, daß der Lötspitzenschaft eine kegelstumpfförmige Erweiterung (70) zwischen dem Schaft (66) und dem äußeren Teil (68) aufweist, die sich am Rand der Montageöffnung (64) abstützt.

12. Lötkolben nach einem der vorangegangenen Ansprüche,
dadurch gekennzeichnet, daß die Öffnung (80) für den Sekundärlufteintritt und den Flammen- und Abgasaustritt des Heizkörpers (40) oben am Heizkörper (40) vorgesehen ist.

13. Lötkolben nach einem der vorangegangenen Ansprüche,
dadurch gekennzeichnet, daß die Oberfläche des Lötspitzenschaftes einen Zwischenteil (86) in Form einer Vertiefung besitzt, der eine seitliche Befestigung im Heizkörper mittels einer senkrecht zur Achse des Lötspitzenschaftes ausgerichteten Sicherungsschraube ermöglicht.

14. Lötkolben nach einem der Ansprüchen 10 und 11,
dadurch gekennzeichnet, daß der Festdrehen der Befestigungsschraube zwischen dem oberen Ende des Lötspitzenschaftes und der gegenüberliegenden Wand des Heizkörpers einen Abstand verbleiben läßt.

EP 0 208 583 B2

FIG. 2

FIG. 1

9

FIG. 3

FIG. 4